(19) Europäisches Patentamt
European Patent Office
Office européen des brevets

(11) Publication number: **0 474 927 A1**

# (12) EUROPEAN PATENT APPLICATION

(21) Application number: **90309900.0**

(22) Date of filing: **10.09.90**

(51) Int. Cl.5: **C08L 23/02**, C08L 23/16, C08L 23/22, C08L 51/00, C08L 23/28

(43) Date of publication of application: **18.03.92 Bulletin 92/12**

(84) Designated Contracting States: **AT BE CH DE DK ES FR GB IT LI NL SE**

(71) Applicant: **ADVANCED ELASTOMER SYSTEMS, L.P.**
**540 Maryville Center Drive**
**St. Louis, Missouri 63166-6735(US)**

(72) Inventor: **Dharmarajan, Narayamaswami Raja**
**6 D Cedar Lane**
**Highland Park, New Jersey 08904(US)**

(74) Representative: **Duyck, Frans N.E. et al**
**OFFICE KIRKPATRICK Square de Meeûs, 4**
**B-1040 Bruxelles(BE)**

## (54) Dynamically vulcanized alloys adherent to styrene copolymers and polyester compositions.

(57) A dynamically vulcanized alloy composition comprising a polyolefin, a chemically modified polyolefin, a functionalized polystyrene and a vulcanizable elastomer. The composition has superior adherence to styrenic copolymers and polyester compositions.

EP 0 474 927 A1

1. Field of the Invention

This invention relates to polymer blends which have a combination of both elastic and thermoplastic properties and which are of significant commercial interest. Such thermoplastic elastomers compositions are generally obtained by blending an elastomeric composition with a thermoplastic composition in a way such that the elastomer is intimately and uniformly dispersed as a discrete phase within a continuous phase of the thermoplastic composition. These polymer blends have been given the generic designation of Thermoplastic Olefins ("TPO"). They exhibit some of the properties of a cured elastomer as well as the reprocessibility of a thermoplastic resin. The elastomeric characteristics are enhanced if one component of the blend is a vulcanizable elastomer which is wholly or partially cross-linked.

2. Background

The earliest work in the curing of a TPO composition was by Gessler and Haslett; see U.S. Patent No. 3,037,954. The patent teaches the concept of "dynamic curing" wherein a vulcanizable elastomer is dispersed into a resinous thermoplastic polymer and the elastomer is cured while continuously mixing and shearing the polymer blend. The resulting blend is a micro-gel dispersion of cured elastomer in an uncured matrix of resinous thermoplastic polymer which is known as a dynamically vulcanized alloy ("DVA").

Gessler, '954 discloses compositions comprising polypropylene and a rubber such as, inter alia, butyl rubber; chlorinated butyl rubber, polybutadiene, polychloroprene and polyisobutene. Compositions of about 50 to 95 parts of polypropylene and about 5 to 50 parts of rubber are disclosed.

Since these early beginnings in TPO technology, research and development has been increasingly directed toward the production of TPOs of improved properties or properties desired in specialized applications. There are several variables that may be manipulated to effect changes in TPO physical properties. Some of these variables include the relative weight percentages of the elastomeric and thermoplastic components, the degree of cure of the elastomeric component, the quantity and type of fillers, plasticizers and additives included in the TPO, etc. It is not, however, always clear how these variables should be manipulated to obtain a specific, desired result.

Thus, for instance, U.S. Patent 4,593,062 to Puydak et al. teaches that a TPO containing equal parts of polyolefin, halobutyl rubber and polychloroprene rubber has good flow, good strength, excellent processibility, low compression set, good oil resistance and good surface characteristics in injection molded parts.

Further, U.S. Patent 4,607,074 to Hazelton et al is directed to a TPO that includes a polyolefin resin and at least two elastomers: one of which is fully vulcanized while the other remains uncured. This TPO provides a soft, flexible material with low compression set and high tensile strength suitable for use as gaskets, flexible boots, seals, etc.

U.S. Patent 4,130,534 to Coran et al is directed to an "elastoplastic composition" including 20-45 wt.% of a thermoplastic polyolefin, and 80-55 wt.% of a fully vulcanized butyl rubber dispersed as particles in a matrix of the polyolefin. The compositions are said to be soft, tough, strong, reprocessible as thermoplastics and are also said to exhibit excellent high temperature dimensional stability. Further, the composition may be extended with inexpensive process oils without serious diminution of properties.

Significantly, while the above patents indicate that efforts have been directed to the composition of the TPOs, little research has been directed to the order of mixing of the components of the TPOs. A preference is usually expressed for mixing all components at one time in a single batch. This may be for ease of operation, or because such operation results in cost savings by way of labor and time. In any event, single batch operation is usually preferred. It is noteworthy that prior art patents referring to the inclusion of fillers and additives, for instance, indicate either no preferential order of addition of these fillers and additives, or prefer that they be included in the initial mix before dynamic vulcanization commences. For example, U.S. Patent 4,130,535 to Coran et al, at columns 12-13 teaches that one should first mix rubber with the filler, then add the resin and then dynamically vulcanize the blend. Similarly, U.S. Patent 4,593,062 to Puydak et al expresses a preference that all ingredients be present before dynamic vulcanization commences. U.S. Patent 4,311,628 to Abdou-sabet at column 3 refers to mixing all ingredients except the curative at a temperature above the resin melting point, i.e., all ingredients are added before dynamic vulcanization commences. The same patent at column 9 indicates that ingredients which are "conventional in the compounding of EPDM rubber, polyolefin resin and blends thereof" may be added before or after vulcanization. However, this patent also indicates a preference for adding extender oils and a filler, carbon black, before dynamic vulcanization. Finally, U.S. Patent 4,735,982 to Orndorff Jr. is directed to TPO blends produced by compounding a cured rubber with a thermoplastic olefin resin. Thus, the rubbers are not dynamically vulcanized but are pre-vulcanized before contact with the resin. The additives and fillers are

then added when the resin and cured rubber are combined.

Thus, the art relating to the use of fillers in dynamically vulcanized alloys ("DVAs") does not attach any great significance to the stage of the process at which components or fillers are introduced into the blend.

Our copending application, "Dynamically Vulcanized Alloys Having Improved Stiffness/Impact Balance," of Puydak et al, U.S. Serial No. 358,974 indicates that the order of addition is a significant variable affecting the properties of the DVA produced. This application indicates that the addition of certain components, such as fillers and ultra-violet light stabilizers, after at least partial dynamic vulcanization of the elastomeric component will exclude these components from the elastomeric component, depending upon the extent of elastomer vulcanization. As a consequence of the exclusion of fillers from the elastomeric component, a DVA of enhanced stiffness/impact balance may be produced. Further, when ultra-violet light stabilizers are retained in the thermoplastic matrix, the DVA exhibits enhanced resistance to ultra-violet light degradation.

The teachings of our copending application, U.S. Serial No. 358,974, hereby incorporated by reference as if fully set forth, indicates that order of mixing may be an additional variable to consider in developing customized DVAs for specific applications. The development of a dynamically vulcanized alloy (DVA) to meet specific needs, therefore, involves the manipulation of both composition and process variables to produce a DVA with suitable properties.

In the durable goods industry, a need exists for a material that may be used to cover the typical, hard styrenic copolymer or polyester compositions that comprise some of the surfaces exposed to the consumer's sight and touch. The material should, desirably, adhere readily and permanently to styrenic copolymers and polyesters. Further, the material should be hard-wearing, pleasant to the touch, aesthetically pleasing in appearance and color, and desirably moldable to provide an attractive textured surface.

## Summary of the Invention

The invention is a dynamically vulcanized alloy which has excellent adherence to styrenic copolymers and polyester compositions and which comprises a vulcanizable rubber, i.e. elastomer, a polyolefin, a chemically modified polyolefin, a functionalized polystyrene and, optionally, a plasticizer.

The invention provides a novel thermoplastic olefin composition that is highly adherent to many thermoplastic resins in commercial use. Unique composites including a "hard" base composition adhered with a "soft" thermoplastic composition may now be prepared. These composites not only possess a pleasant, soft-touch tactile quality due to the thermoplastic composite surface but may also be imprinted with a pattern, such as a leather grain, on the thermoplastic surface to provide an aesthetically pleasing surface. These surface characteristics are desirable in certain goods, for instance, consumer durables such as automobiles, large appliances and the like. In the durable goods industry, typical "hard" surfaces include those fabricated from styrenic copolymers and polyester compositions. The invention DVA may be readily adhered to styrenic copolymers or polyester compositions by means of co-injection molding, co-extrusion, lamination under heat and pressure, and like processes known to those of ordinary skill in the art. Further, the invention DVAs may be painted to provide the surface colors demanded by consumers.

The invention adherent DVA may be produced using standard equipment for carrying out the dynamic vulcanization of elastomers. Thus, no specialized equipment is necessary. Further, the useful curative systems include known cure systems, such as, for instance, metal oxides, sulfur, phenolic resins, peroxides, maleimides, etc.

The adherent DVA may be produced in a simple single-batch operation wherein the elastomer and the polyolefin are combined under conditions of dynamic vulcanization. However, it is preferred that the chemically modified polyolefin and the functionalized polystyrene be added after at least partial dynamic vulcanization of the elastomeric component. The plasticizer may be added to the batch initially or in portions as vulcanization progresses.

The vulcanizable elastomeric component of the invention DVA may be either completely or only partially vulcanized. The physical properties of the DVA are dependent upon the extent of vulcanization. Thus, for instance, a fully vulcanized DVA will have better resistance to permanent deformation under compression and have a higher coefficient of friction surface, rubbery feel, while an only partially vulcanized DVA will have improved flow characteristics for moldability. Regardless of extent of vulcanization, the invention DVA possesses superior adherence to styrenic copolymers and thermoplastic polyester compositions.

## Detailed Description

This invention relates to the production of a dynamically vulcanized alloy (DVA) having enhanced

adhesion to styrene copolymers and thermoplastic polyesters. The invention DVA is obtained by dynamically vulcanizing a mixture comprising a polyolefin resin, a vulcanizable elastomer, a chemically modified polyolefin, a functionalized polystyrene, a plasticizer and a cure system effective for the selected elastomer.

While recognizing that the degree of adhesion of a composition to other compositions is a continuum ranging from no adherence to complete adherence, for ease of description, the degree of a DVA's adherence to styrene copolymers and polyesters may be categorized into three groups: no adhesion, "partial rubber tear," and "complete rubber tear."

The "no adhesion" category is self-explanatory and indicates that the DVA does not adhere to the styrenic copolymer or polyester at all so that the compositions may be cleanly separated or peeled apart at the interface between them.

The "partial rubber tear" category encompasses those DVAs that adhere to styrenic copolymers or polyesters so that when the DVA is separated from the styrenic copolymer or polyester, separation is not clean at the interface between the compositions. Some of the DVA adheres so strongly to the styrenic copolymer or polyester that there is localized tearing of the DVA on separation and some of the DVA remains adhered to the styrenic copolymer or polyester surface.

The "complete rubber tear" category encompasses those DVAs that are so firmly adherent to styrenic copolymers and polyesters that they cannot be separated without tearing the DVA, leaving the surface of the styrenic copolymer or polyester coated with DVA, except for minor localized areas where there may be some separation leaving a clean interface.

As used in the specification and claims, the term "dynamic vulcanization" means a vulcanization process for a rubber-containing TPO composition wherein the rubber is at least partially vulcanized under conditions of high shear, as a result of which, the rubber is simultaneously cross-linked and dispersed as fine particles of a "micro-gel" within the thermoplastic resin matrix. Dynamic vulcanization is effected by mixing the TPO ingredients at a temperature at or above the curing temperature of the rubber in equipment such as roll mills, Banbury mixers, continuous mixers, kneaders or mixing extruders, e.g., twin screw extruders. The unique characteristic of dynamically cured compositions is that, notwithstanding the fact that the rubber component is at least partially cured or even fully cured, the compositions can be processed and reprocessed by conventional rubber processing techniques such as extrusion, injection molding, compression molding, etc. Scrap or flashing can be salvaged and reprocessed.

The term "dynamically vulcanised alloy" (DVA) as used in the specification and claims means a composition comprising a polyolefin resin containing at least one rubber wherein at least a portion of the rubber has been dynamically vulcanized to a fully cured state. The DVA compositions are prepared by blending together the polyolefin resin and rubber with cure systems under conditions of dynamic vulcanization.

The term "rubber" is used interchangeably with the term "elastomer" in the specification and claims and means any natural or synthetic polymer which can be vulcanized or cured so as to exhibit elastomeric properties. Thus, the terms "vulcanizable rubber" and "vulcanizable elastomer" are also used interchangeably throughout the specification and claims.

The elastomers useful in the present invention include the vulcanizable rubbers such as the butyl rubbers, styrene-butadiene based rubber, ethylene-propylene rubber (EPM), ethylene-propylene-diene rubber (EPDM), polychloroprene (neoprene), nitrile rubber, natural rubber and the like, all of which products are known in the art and all of which may be produced by methods well known in the art.

Butyl rubber is a copolymer of an isoolefin and a conjugated multiolefin. The useful rubber copolymers comprise a major portion of isoolefin and a minor amount, preferably not more than 30 wt.%, of a conjugated multiolefin. The preferred rubber copolymers comprise about 85-99.5 wt.% (preferably 95-99.5 wt.%) of a $C_4$-$C_7$ isoolefin, such as isobutylene, and about 15-0.5 wt.% (preferably 5-0.5 wt.%) of a multiolefin of about 4-14 carbon atoms. These copolymers are referred to in the literature as "butyl rubber"; see for example, the textbook Synthetic Rubber by G. S. Whitby (1954 edition by John Wiley and Sons, Inc.) pp. 838-891. The term "butyl rubber" as used in the specification and claims includes the aforementioned copolymers of an isoolefin having 4-7 carbon atoms and about 0.5 to 20 wt.% of a conjugated multiolefin of about 4-10 carbon atoms. Preferably these copolymers contain about 0.5 to about 5% conjugated multiolefin. The preferred isoolefin is isobutylene. Suitable conjugated multiolefins include isoprene, butadiene, dimethyl butadiene, piperylene, etc. Commercial butyl rubber is a copolymer of isobutylene and minor amounts of isoprene.

The term "halogenated butyl rubber" as used in the specification and claims refers to butyl rubber as described above which has been halogenated with from about 0.1 to about 10, preferably, about 0.5 to about 3.0 wt.% chlorine or bromine. The chlorinated species of butyl rubber is commonly referred to as "chlorobutyl rubber" and the brominated species as "bromobutyl rubber."

Among the useful elastomers are the copolymers of an isoolefin and a para-alkylstyrene. The polymerization units of these copolymers may be characterized by the formula:

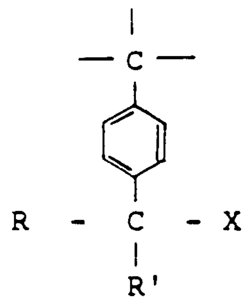

where R and R' are independently selected from the group consisting of hydrogen, alkyl groups having about 1 to about 5 carbon atoms, and primary and secondary alkyl halides having about 1 to about 5 carbon atoms, and X is selected from the group consisting of bromine and chlorine and mixtures thereof. The brominated copolymer of isoolefins and an alkyl styrene are disclosed in U.S. Patent Application Serial No. 199,655 filed May 27, 1988 which is hereby incorporated by reference.

The term "EPM" and "EPDM" are used in the sense of their ASTM designations. EPM is an ethylene-propylene copolymer rubber which can be cross-linked by radiation curing or peroxide curing. EPDM is a terpolymer of ethylene, propylene and a non-conjugated diene. Illustrative non-limiting examples of suitable non-conjugated dienes are 5-ethylidene-2-norbornene (ENB); 1,4-hexadiene; 5-methylene-2-norbornene (MNB); 1,6-octadiene; 5-methyl-1,4-hexadiene; 3,7-dimethyl-1,6-octadiene; 1,3-cyclopentadiene; 1,4-cyclohexadiene; tetrahydroindene; methyl-tetrahydroindene; dicyclopentadiene; 5-isopropylidene-2-norbornene; 5-vinyl-norbornene; etc.

The term "nitrile rubber" means an acrylonitrile copolymer rubber. Suitable nitrile rubbers comprise rubbery polymers of 1,3-butadiene or isoprene and acrylonitrile. Preferred nitrile rubbers comprise polymers of 1,3-butadiene and about 20-50 wt.% acrylonitrile. Any nitrile rubber which is a "solid" rubber having an average molecular weight of at least 50,000, and preferably between about 100,000-1,000,000 can be used. Commercially available nitrile rubbers suitable for the practice of the invention are described in Rubber World Blue Book, 1980 Edition, Materials and Compounding Ingredients for Rubber, pages 386-406.

The preferred polyolefin resins are polypropylene and high density polyethylene (HDPE). While other polyolefin homopolymers and copolymers of ethylene can be utilized in the practice of this invention, the resulting DVA compositions are deficient in the high temperature characteristics desired for durable goods applications. Such other polyolefins include low density polyethylene (LDPE), linear low density polyethylene (LLDPE) and polybutylene (PB), as well as copolymers of ethylene with vinyl acetate, acrylic acid, methyl acrylate, ethyl acrylate, ethylene-1 olefin copolymers (such as ethylene-butene and ethylene-hexene), etc. These other polyolefin resins can be incorporated into the DVA compositions of this invention along with the polypropylene ("PP") or polyethylene ("PE"). Further, these other polyolefins can be used as the polyolefin, alone or in combination with each other, but will usually find application outside the field of durable goods.

As used in the specification and claims, the term "polypropylene" includes homopolymers of propylene as well as reactor copolymers of polypropylene (RCPP) which can contain about 1 to about 20 wt.% ethylene or an alpha olefin comonomer of 4 to 16 carbon atoms. The polypropylene can be highly crystalline isotactic or syndiotactic polypropylene. The RCPP can be either a random or block copolymer. The density of the PP or RCPP can be about 0.80 to about 0.9 g/cc; generally, about 0.89 to about 0.91 g/cc.

High density polyethylene (HDPE), useful as the polyolefin resin of this invention, has a density of about 0.941 to about 0.965 g/cc. High density polyethylene is an established product of commerce and its manufacture and general properties are well known to the art. Typically, HDPE has a relatively broad molecular weight distribution, characterized by the ratio of weight average molecular weight to number average molecular weight of from about 20 to about 40.

Polyolefin resins which can optionally be included in the compositions of this invention include polybutylene, LDPE and LLDPE as well as copolymers of ethylene with unsaturated esters of lower carboxylic acids. The term "polybutylene" generally refers to thermoplastic resins of both poly(1-butene)-homopolymer and the copolymer with, for example, ethylene, propylene, pentene-1, etc. Polybutylene is

manufactured via a stereo-specific Ziegler-Natta polymerization of monomer(s). Commercially useful products are of high molecular weight and isotacticity. A variety of commercial grades of both homopolymer and ethylene copolymer are available with melt indices that range from about 0.3 to about 20 g/10 min.

The term "low density polyethylene" or "LDPE" as used in the specification and claims mean both low and medium density polyethylene having densities of about 0.910 to about 0.940 g/cc. The terms include linear polyethylene as well as copolymers of ethylene which are thermoplastic resins.

Linear low density polyethylene (LLDPE) is a class of low density polyethylene characterized by little, if any, long chain branching, in contrast to conventional LDPE. The processes for producing LLDPE are well known in the art and commercial grades of this polyolefin resin are available. Generally, it is produced in gas-phase fluidized bed reactors or liquid-phase solution process reactors; the former process can be carried out at pressures of about 100 to 300 psi and temperatures as low as 100 ° C.

The useful chemically modified or "functionalized" polyolefins include the above-described homo and copolymers of ethylene and propylene chemically modified by the incorporation of functional groups which are reactive with oxazoline and epoxy and which are pendant from the backbone of the polymeric chain. Thus, for example, the homo and copolymers of ethylene and propylene may be chemically modified by grafting onto the polymer backbone pendant groups such as carboxylic acids, anhydrides, phenolic hydroxyls, amines, mercaptans and epoxies. Of these groups, the anhydride groups selected from maleic, fumaric, itaconic and himic are preferred. The preferred functionalized olefin is a chemically modified polyolefin containing a sufficient proportion of the anhydride groupings to co-react with the functionality of the polystyrene. These preferred chemically modified polyolefins may be exemplified by the himic anhydride modified polypropylenes. Such himic anhydride modified polypropylenes are well-known in the art and are commercially available; for instance, EXXELOR™ PO 2011 from Exxon Chemical.

Methods for producing functionalized polyolefins are well-known to those of ordinary skill in the art. For instance, the functionalization may be effected by a peroxide-initiated grafting process in either liquid or solution phase. These peroxide-based processes may be exemplified by U.S. Patent 4,506,056 to Gaylord (incorporated by reference as if fully set forth), which is directed to a process for the maleation of polypropylene with maleic anhydride, and which also indicates how to graft maleic acid onto a polyolefin backbone. The particular method employed to chemically modify the polyolefin is not, however, of significance in the present invention as long as the grafted functional group is able to bond with the functional group of the functionalized polystyrene component of the DVA.

The useful functionalized polystyrenes of this invention are those containing groups able to bond with the reactive groups grafted onto the chemically modified polyolefin. While a variety of such functionalized polystyrenes are possible, the epoxy-functionalized and oxazoline-functionalized polystyrenes are preferred.

The preparation of the oxazoline-functionalized polystyrenes is described in U.S. Patent 3,505,297 which teaches both the preparation of oxazoline-containing monomers, by the reaction of certain imidoester hydrohalides with a strong base, as well as the homo- and copolymerization of these monomers by conventional methods of addition polymerization using free-radical initiating catalysts. The disclosures of this patent are incorporated by reference as if fully set forth. As is also disclosed in European Patent Application 0 146 965, the oxazoline-functionalized polystyrene useful in this invention can be prepared by copolymerizing styrene, for example, with a monomer mixture comprising an ethylenically unsaturated monomer containing a cyclic iminoether group. Such cyclic iminoether groups can be described by the general structure

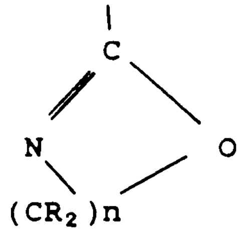

wherein each $R_2$ is independently hydrogen, or an inertly substituted hydrocarbon containing 18 or fewer carbon atoms; and n is a number from 1 to 5. Said cyclic iminoether group can be attached to the polymer chains through any of the carbon atoms in the ring. Preferably, the cyclic iminoether is a 2-iminoether, i.e., is attached to the polymer chain through the 2-carbon atom to yield a structure represented as

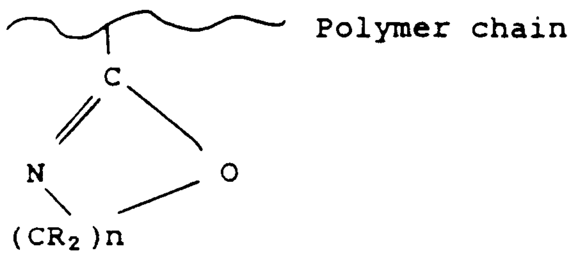

where $R_2$ and n are as defined hereinbefore. Preferably, each $R_2$ is hydrogen or lower alkyl and n is 1, 2 or 3. Most preferably, each $R_2$ is hydrogen, n is 2 and the cyclic iminoether is a 2-oxazoline group. By "inertly substituted" it is meant that the referenced group contains no functional group which interferes with the polymerization or curing of the oxazoline group. Preferably, such monomer is a 2-alkenyl-2-oxazoline wherein said alkenyl group contains from 2 to 8, preferable 2 to 4 carbon atoms. Most preferably, said monomer is 2-isopropenyl-2-oxazoline.

Included within the term "polystyrene" for the purposes of defining the functionalized polystyrene of this invention are those polymers which comprise not only monomers of styrene, in major part, but also in minor part those monomers known in the art to be copolymerizable both with styrene and the ethylenically-unsaturated monomer containing a cyclic iminoether group. As will be obvious to those of ordinary skill in the art, two or more of these copolymerizable monomers may be combined with styrene to constitute a useful polystyrene as defined herein. Of particular usefulness in the practice of this invention is the polymer comprised of styrene, acrylonitrile and 2-isopropenyl-2-oxazoline.

Included in the monomers which can be so copolymerized are the known ethylenically unsaturated polymerizable monomers which are non-acidic, i.e., neutral or basic in that they do not have acid substituents such as -COOH, $-SO_3H$, -COC1, and acid anhydrides. Suitable basic and neutral ethylenically unsaturated polymerizable monomers include the non-acidic alkenylaromatic compounds, the esters, salts, nitriles, and amides of ethylenically unsaturated acids, esters of unsaturated alcohols, unsaturated ethers, unsaturated ketones, ethylenically unsaturated aliphatic hydrocarbons, and other neutral or basic compounds containing one or more ethylenic linkages capable of addition polymerization. Specific examples of such non-acidic ethylenically unsaturated compounds are styrene, α-methylstyrene, ar-methylstyrene, ar-ethylstyrene, α,ar-dimethylstyrene, ar,ar-dimethylstyrene, divinylbenzene, vinylnapthalene, divinylnaphthalene, hydroxystyrene, methoxystyrene, aminostyrene, cyanostyrene, acetylstyrene, monochlorostyrene, dichlorostyrene, other halostyrenes, vinylpyridine, salts of acrylic and methacrylic acids, methyl methacrylate, ethylacrylate, glycol diacrylate, hexyl acrylate, lauryl methacrylate, phenyl acrylate, allyl acrylate, acrylonitrile, methacrylonitrile, acrylamide, methacrylamide, acrylanilide, ethyl a-chloroacrylate, diethyl maleate, diallyl fumarate, vinyl acetate, vinyl propionate, vinyl butyrate, vinyl benzoate, vinyl chloride, vinyl bromide, vinylidene chloride, vinylidene bromide, vinyl methyl ketone, methyl isopropenyl ketone, vinyl carbazole, vinyl ethyl ether, divinyl ether, isobutylene, 1,3-butadiene, isoprene, and the like.

Among the commercially available useful oxazoline-functionalized polystyrenes is Reactive Polystyrene of Dow Chemical which contains about 1% oxazoline and which has a molecular weight of about 200,000.

Since the invention DVA incorporates a functionalized polystyrene which has a polar group, it is expected that the invention would have enhanced paint adherence over DVAs not containing this functionalized polystyrene component. Thus, the DVAs may be painted in colors desirable for certain consumer goods.

The invention DVA includes compositions wherein the elastomer ranges from about 10 to about 90 wt.%, preferably about 15 to 70 wt.%, and most preferably about 20 to 40 wt.%, based upon the total weight of the DVA composition.

The polyolefin content of the DVA may vary from about 10 wt.% to about 90 wt.% based upon the total weight of the DVA composition. However, it is preferred that the polyolefin content range from about 10 to 60 wt.%, most preferably from about 16 to 20 wt.%, based upon the total weight of the DVA composition.

The chemically modified polyolefin content of the invention DVAs may range from about 2 to about 15 wt.% although the preferred modified polyolefin content is in the range from 3 to about 10 wt.% based upon the total weight of the DVA composition.

The functionalized polystyrene content of the invention DVA may vary from about 3 wt.% to about 18 wt.%, however, it is preferred that the functionalized polystyrene content range from about 5 wt.% to about 12 wt.%, based upon the total weight of the DVA composition.

The functionalized polystyrene (FPS) and chemically modified polyolefin (CMP) may be included in the

invention DVA in the range of mass ratios CMP:FPS from about 0.1:1 to about 5:1, preferably from about 0.25:1 to about 2:1.

The polyesters referred to include those which are available commercially or can be prepared by known techniques such as by the alcoholysis of esters of aryl dicarboxylic acids for example, terephthalic or isophthalic acid with diprimary alcohols, as for example, glycols, di, tri, tetra or pentamethylene glycols, and subsequent polymerization, by heating the glycols with the free acids or with the halide derivatives thereof, and similar processes. These are described in U.S. Patent No. 2,465,319 and U.S. Patent No. 3,047,539 and elsewhere.

A range of polyesters are commercially available, for example, poly(ethylene terephthalate) is available from Goodyear Chemical Co. under the brand name VITUF. Poly(butylene terephthalate) and blends of poly(ethylene terephthalate) with poly(butylene terephthalate) are also available from General Electric under the trade name VALOX.

Illustratively the polyesters will generally have an intrinsic viscosity of at least about 0.4 deciliters/gram and preferably at least 0.6 deliciters/gram as measured in a 60:40 phenol/tetrachloroethane mixture at 30 ° C.

The term "polyester" as used in the specification and claims include those compositions commonly referred to as "polycarbonate resins." The term "polycarbonate resin" is meant to embrace within its scope carbonate polymers of dihydric phenols as well as carbonate copolymers of such dihydric phenols of glycols, such as ethylene glycol or propylene glycol, for example; dibasic acids, such as, for example, isophthalic or terephthalic acid, and hydroxyl or acid-terminated polyesters, such as, for example, the hydroxyl or acid-terminated polyester of neopentyl glycol and adipic acid. Such polycarbonate resins may be prepared by reacting a dihydric phenol with a carbonate precursor such as phosgene, a halofornate or a carbonate ester. Generally speaking, the resulting carbonate polymers may be typified as possessing recurring structural units of the formula:

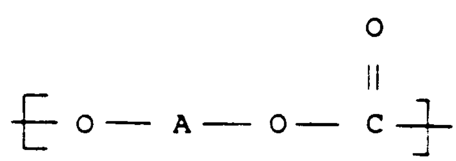

where A is a divalent aromatic radical of the dihydric phenol, preferably bisphenol A, employed in the polymer producing reaction. Preferably, the polycarbonate resins have inherent viscosities (as measured in p-dioxane in deciliters per gram at 30 ° C) ranging from about 0.35 to about 0.75.

The copolymers of styrene to which the invention DVAs are adherent are well-known and widely-used compositions, the production and methods of fabrication of which are also well-known in the art. Styrene copolymers are thermoplastic resins which can be produced in a variety of molecular weight ranges for particular applications depending upon the degree of polymerization. Styrene is often copolymerized with a selected monomer to produce copolymers with specific, desired properties. For instance, copolymerization with maleic anhydride increases heat resistance. The invention DVA is adherent to those copolymers of styrene with carboxylic acids, such as, for instance, styrene acrylic, styrene p-vinyl benzoic, styrene crotonic, styrene crotonaldehyde, styrene-2 methylene hexanoic, styrene methacrylic, styrene 9,12-octadecadienoic, styrene 9,11,13-octadecatrienoic, and styrene 2-methylene valeric, as long as the copolymerized acid group is not reacted with an ester. The invention DVA is also adherent to copolymers of styrene with an anhydride, such as, styrene maleic anhydride, styrene methacrylic, and styrene methylene succinic. Further, the invention DVA is adherent to copolymers of styrene with a phenolic hydroxyl, such as, styrene n-p-hydroxyphenyl-maleimide, styrene $\alpha$-methyl-p-vinyl phenethyl alcohol, styrene m-vinyl-phenol, styrene o-vinyl-phenol, and styrene-p-vinyl phenol. Moreover, it is anticipated that the invention DVA will be similarly adherent to copolymers of styrene with epoxies, amines or mercaptans. It should also be noted that the term "styrenic copolymer" or "copolymers of styrene" as used in the specification and claims is not limited to a copolymer of styrene with a single monomer but also includes the copolymers of styrene with more than one other monomer. Thus, for instance, copolymers of styrene or styrenic copolymer include the terpolymers of styrene, such as for instance, styrene-methyl-methacrylate-maleic anhydride which is believed to be the composition sold by Monsanto Corporation as CADON®. Styrenic copolymers are used in packaging, refrigerator doors, air conditioner housings, molded household wares, automotive instrument panels, electrical equipment, and the like.

In addition to its polymer component, the DVA composition of this invention can include process aids

such as reinforcing and non-reinforcing fillers, antioxidants, stabilizers, rubber processing oils, antiblocking agents, antistatic agents, coupling agents for the fillers, foaming agents, pigments, flame retardants, and other processing aids known to the rubber compounding art. Process aids can comprise up to 60 wt.% of the total DVA composition; preferably process aids comprise about 20 to about 60 wt.% of the total DVA composition, most preferably about 30 to about 60 wt.% of the total DVA composition.

These processing aids may be added singly or in combination with each other in conventional amounts which may be modified for specific applications. The conventionally added amount of filler typically ranges from about 0 to about 40 wt.%, preferably 0 to about 20 wt.% based on the total weight of the DVA composition. When used, stabilizers and antioxidants are conventionally added in the range 0 to about 3 wt.%; anti-blocking agents in the range 0 - 5 wt.%; anti-static agents in the range 0 - 3 wt.%; foaming agents in the range 0 - 10 wt.%; coupling agents for fillers in amounts less than about 3 wt.%; pigments are added as needed for obtaining the desired color, typically 0 - 5 wt.%; and flame retardants, when used are typically added in the range 0 - 10 wt.%; where all weight percentages are approximate and are based on the total weight of the DVA composition. The addition of slip additives such as lubricants and waxes is not recommended because these "bloom" to the DVA surface interfering with the adherent property of the invention DVAs.

Fillers can be inorganic fillers such as calcium carbonate, clays, silica, talc, titanium dioxide or carbon black. Any type of carbon black can be used, such as channel blacks, furnace blacks, thermal blacks, acetylene black, lamp black and the like.

Rubber process oils or plasticizers have particular ASTM designations depending on whether they fall into the class of paraffinic, naphthenic or aromatic process oils. They are derived from petroleum fractions. The type of process oil utilized will be that customarily used in conjunction with the rubber component. The ordinarily skilled rubber chemist will recognize which type of oil should be utilized with a particular rubber. The quantity of rubber process oil utilized is based on the total rubber content, both cured and uncured, and can be defined as the ratio, by weight, of process oil to the total rubber in the DVA. This ratio can vary from about 0 to about 1.5/1; preferably about 0.2/1 to about 1.00/1; more preferably about 0.3/1 to about 0.9/1. Larger amounts of process oil can be used, the resultant effect being reduced physical strength of the composition. Oils other than petroleum based oils, such as oils derived from coal tar and pine tar, can also be utilized. In addition to the petroleum derived rubber process oils, organic esters and other synthetic plasticizers can be used.

Antioxidants can be utilized in the composition of this invention -- the particular antioxidant utilized will depend on the rubbers utilized and more than one type may be required. Their proper selection is well within the ordinary skill of the rubber processing chemist. Antioxidants will generally fall into the class of chemical protectors or physical protectors.

Physical protectors are used where there is to be little movement in the part to be manufactured from the composition. The physical antioxidants include mixed petroleum waxes and microcrystalline waxes. These generally waxy materials impart a "bloom" to the surface of the rubber part and form a protective coating to shield the part from oxygen, ozone, etc.

The chemical protectors generally fall into three chemical groups; secondary amines, phenolics and phosphites. Illustrative, non-limiting examples of types of antioxidants useful in the practice of this invention are hindered phenols, amino phenols, hydroquinones, alkyldiamines, amine condensation products, etc. Further non-limiting examples of these and other types of antioxidants are styrenated phenol; 2,2'-methylene-bis(4-methyl-6-t-butylphenol); 2,6'-di-t-butyl-o-dimethylamino-p-cresol; hydroquinone monobenzyl ether; octylated diphenyl amine; phenyl-beta-naphthylamine; N,N'-diphenylethylene diamine; aldol-alpha-naphthylamine; N,N'-diphenyl-p-phenylene diamine; etc.

Any conventional cure system for the rubber to be dynamically vulcanized can be used. These include sulfur cures as well as non-sulfur cures. For example, halogenated butyl rubber can be cured using zinc oxide. Of course, accelerators such as dithiocarbamates or thiurams and thioureas can be included in these zinc oxide cures. Zinc oxide free cures of halogenated butyl rubber known to the art can also be utilized. For example, such cure systems comprise litharge, 2-mercaptoimidazoline and diphenyl guanidine.

The compositions of this invention may be cured with maleimide cure systems. The maleimide compound preferably used in the invention is a bismaleimide compound. Among the bismaleimide compounds, m-phenylene bismaleimide (4,4'-m-phenylene bismaleimide) is especially superior in effectiveness and is most preferred. Examples of the bismaleimides are 4,4'-vinylenediphenyl bismaleimide, p-phenylene bismaleimide, 4,4'-sulfonyldiphenyl bismaleimide, 2,2'-dithiodiphenyl bismaleimide, 4,4,'-ethylene-bis-oxophenyl bismaleimide, 3,3'-dichloro-4,4'-biphenyl bismaleimide, o-phenylene bismaleimide, m-phenylene bismaleimide (HVA-2), hexamethylene bismaleimide and 3,6-durine bismaleimides.

The maleimide curative systems include an effective amount of a maleimide curing agent. By "effective

amount" it is meant that the amount is sufficient to effect a fully cured state of at least a portion of the halobutyl elastomer. Such effective amounts range typically from about 0.5 to about 4 phr (parts per hundred rubber), or greater.

A preferred cure system comprises a metal oxide and a maleimide composition and most preferably comprises ZnO and m-phenylene bismaleimide. The ratio of metal oxide to maleimide may typically range from about 10:1 to about 1:10, preferably from about 3:1 to about 1:3. The effective amount of the combined metal oxide-maleimide cure system is typically about 0.5 to 15 phr (parts per hundred of rubber) or greater.

Resin cure systems can be used to vulcanize EPDM and butyl rubbers. The resins useful in cure systems are phenolic resins, brominated phenolic resins, urethane resins, etc.

While phenolic resin cures are suitable cures, they impart a yellowish or orangish tinge to the rubber part. For halogenated butyl rubber, a preferred cure system is one based on ZnO and MgO. Such cure systems permit the use of pigments such as $TiO_2$ to give bright white compositions. In this system, the MgO acts not as an accelerator but as an acid acceptor to stabilize the rubber from dehydrohalogenation.

Organic peroxides may be used in the cure systems of the invention DVA except where the elastomer is a chlorobutyl rubber. Where bromobutyl rubber is the elastomer, peroxide curative systems may be used. Specific examples of the useful organic peroxides are octanoyl peroxide, lauroyl peroxide, benzoyl peroxide, tert-butyl peroctoate, p-chlorobenzoyl peroxide, 2,4-dichlorobenzoyl peroxide, cyclohexanone peroxide, tert-butyl peroxybenzoate, methyl ethyl ketone peroxide, dicumyl peroxide, di-tert-butyl peroxide, 2,5-dimethyl-2,5-di(benzoylperoxy)hexane 2,5-dimethyl-2,5-di(tert-butylperoxy)hexane, di-tert-butyl diperoxyphthalate, tert-butylcumyl peroxide, diisopropylbenzene hydroperoxide, 1,3-bis(tert-butylperoxyisopropyl)-benzene, tert-butyl peroxypivalate, 3,5,5-trimethylhexanoyl peroxide, 1,1-bis(tert-butylperoxy)-3,5,5-trimethylcyclohexane, 1,1-bis(tert-butylperoxy)cyclohexane, etc.; azo compounds such as azobisisbutyronitrile, etc.; and the like.

The peroxide-based cure systems may be used with or without co-agents such as sulfur, ethylene dimethacrylate, polyethylene glycol dimethacrylate, trimethylol propane trimethacrylate, divinyl benzene, diallyl itaconate, triallyl cyanurate, diallyl phthalate, allyl methacrylate, cyclohexyl methacrylate, m-phenylene bismaleimide (HVA-2), and the like.

Illustrative of accelerators which can be used in conjunction with ZnO for curing halobutyl rubber are 2,6-di-tert-butyl-para-cresol; N,N'-diethylthiourea; di-ortho-tolylguanidine; dipentamethylene thuiram tetrasulfide; ethylene trithiocarbonate; 2-mercapto-benzothiazole; benzothiazole disulfide; N-phenyl-beta-naphthylamine; tetramethyl thuiram disulfide, zinc diethyldithiocarbamate, zinc dibutyldithiocarbamate, and zinc dimethyldithiocarbamate. Formulations for the ZnO cure of halobutyl rubber are well known in the art.

While many variations are possible in the process for producing the invention DVA, a simple "single-batch" method is highly effective but not optimal. In this method, for example, the elastomer, polyolefin, modified polyolefin, oxazoline-functionalized polystyrene, fillers and any process aids are combined in a single batch which is mixed at high speed. The temperature of the batch is increased to above about 160°C or above the melt point of the polyolefinic components. At this stage about three quarters of the process oil (plasticizer) is added while the melt is vigorously mixed. Next, the cure system is added and mixing is continued at reduced speed while the exothermic curing reaction takes place until the mixing torque is seen to peak. The remaining one quarter of the plasticizer is then added and mixing speed is increased and continued for about one minute. The batch is then dumped and sheeted out onto a cool mill. After cooling, the mix is ground into small particles and dried. These dried particles may then be processed into products for sale.

While the above-described single-batch blend produces an adherent DVA, to produce a DVA with superior physical properties, it is desirable to exclude the functionalized polystyrene from the elastomeric component. It is further desirable, in order to produce a DVA with excellent adherence to styrenic copolymers and polyesters, to retain at least about 7-8 wt.% of functionalized polystyrene in the thermoplastic matrix based upon the total weight of the DVA composition. In order to produce such a DVA, a preferred "two-step" process may be utilized. In the initial step of this process, the elastomeric component is at least partially vulcanized in a blend not including the functionalized polystyrene and preferably also not including the chemically modified polyolefin. Once at least partial vulcanization has taken place, preferably substantially complete vulcanization, these two components may be added to the melt to produce a DVA of superior physical properties in addition to its adherent property.

In the two-step process, the process oil or plasticizer may be added as in the single batch process i.e. a portion in the initial step when the melt temperature is achieved and the remainder in small quantities after the cure system has been added and vulcanization has commenced. Alternatively, it may be added after vulcanization together with the functionalized polystyrene in the second step.

When chlorobutyl rubber forms part of the elastomeric component, a non-peroxide cure system should be used. Heating and masticating at vulcanization temperatures are generally adequate to complete vulcanization in about 0.5 to about 10 minutes. The vulcanization time can be reduced by elevating the temperature of vulcanization. A suitable range of vulcanization temperatures is from about the peak melting point of the resin (about 160 to 165°C in the case of polypropylene) to about 250°C; more typically, the temperature range is about 150°C to about 230°C. Preferably the vulcanization is carried out at a temperature of about 180°C to about 220°C.

It is preferred that the mixing process be continued until the vulcanization reactions are complete. If vulcanization reactions are permitted to continue after mixing has stopped, the composition will not be reprocessible as a thermoplastic.

In an alternative illustrative method, vulcanization can be commenced at high temperatures in a twin screw extruder and before vulcanization is complete pellets can be formed of the partially prepared DVA using an underwater pelletizer thereby quenching the curing step. At a later time vulcanization can be completed under dynamic vulcanization conditions, for example, a second curing system can be added to the pellets which can be subsequently melt processed. In a next step, the chemically modified polyolefin and the functionalized polystyrene can be added to the melt to produce the invention DVA. While numerous variations of this process are possible, it is preferred that the chemically modified polyolefin and the functionalized polystyrene be added after the elastomeric component is at least partially dynamically vulcanized.

Those ordinarily skilled in the art will appreciate the appropriate quantities, types of cure systems and extent of mixing time required to carry out the vulcanization of the rubber. Where necessary the rubber can be vulcanized using varying amounts of cure system to determine the optimum cure system to be utilized and the appropriate cure conditions to obtain a full cure.

The term "fully vulcanized" as used in the specifications and claims with respect to the dynamically vulcanized rubber component of this invention means that the rubber component to be vulcanized has been cured to a state in which the elastomeric properties of the rubber are similar to those of the rubber in its conventional vulcanized state. The degree of cure of the vulcanized rubber can be described in terms of gel content or, conversely, extractable components. Alternatively, the degree of cure can be expressed in terms of cross-link density.

Where the determination of extractables is an appropriate measure of the state of cure, the improved thermoplastic elastomeric compositions are produced by vulcanizing the curable rubber component of the blends to the point where the composition contains no more than about four percent by weight of the cured rubber component extractable at room temperature by a solvent which dissolves the rubber which is intended to be vulcanized. The rubbers are preferably vulcanized to the point that the composition contains less than two percent by weight of extractables. In general, the less extractables in the cured rubber component, the better are the properties. Still more preferable are compositions comprising essentially no extractable rubber from the cured rubber phase (less than 0.5 wt.%).

Gel content reported as percent gel is determined by a procedure which comprises determining the amount of insoluble polymer by soaking the specimen for 48 hours in organic solvent at room temperature and then weighing the dried residue and making suitable corrections based upon knowledge of the composition. Thus, corrected initial and final weights are obtained by subtracting from the initial weight, the weight of soluble components, other than the rubber to be vulcanized, such as extender oils, plasticizers and components of the compositions soluble in organic solvent, as well as that rubber component of the DVA which it is not intended to cure. Any insoluble pigments, fillers, etc., are subtracted from both the initial and final weights.

To employ cross-link density as the measure of the state of cure which characterizes the improved thermoplastic elastomeric compositions, the blends are vulcanized to the extent which corresponds to vulcanizing the same rubber as in the blend statically under pressure in a mold with such amounts of the same cure systems as in the blend and under such conditions of time and temperature to give an effective cross-link density greater than about $3 \times 10^{-5}$ moles per milliliter of rubber and preferably greater than about $5 \times 10^{-5}$, or even more preferably, $1 \times 10^{-4}$ moles per milliliter of rubber. The blend is then dynamically vulcanized under similar conditions with the same amount of cure system based on the rubber content of the blend as was required for the rubber alone. The cross-link density so determined may be regarded as a measure of the amount of vulcanization which produces the improved thermoplastics. However, it should not be assumed, from the fact that the amount of cure system is based on the rubber content of the blend and is that amount which gives the rubber alone the aforesaid cross-link density, that the cure system does not react with the resin or that there is no reaction between the resin and rubber. Highly significant reactions of limited extent may be involved. However, the assumption that the cross-link

density determined as described provides a useful approximation of the cross-link density of the thermoplastic elastomeric compositions is consistent with the thermoplastic properties and with the fact that the large proportion of the resin can be removed from the composition by high temperature solvent extraction, for example, by boiling decalin extraction.

The cross-link density of the rubber is determined by equilibrium solvent swelling using the Flory-Rehner equation. J. Rubber Chem. and Tech. 30, p. 929. The appropriate Huggins solubility parameters for rubber-solvent pairs used in the calculation were obtained from the review article by Sheehan and Bisio, J. Rubber Chem. & Tech., 39, 149. If the extracted gel content of the vulcanized rubber is low, it is necessary to use the correction of Bueche wherein the term "v" is multiplied by the gel fraction (% gel/100). The cross-link density is half the effective network chain density "v" determined in the absence of resin. The cross-link density of the vulcanized blends should therefore be understood to refer to the value determined on the same rubber as in the blend in the manner described. Still more preferred compositions meet both of the aforedescribed measures of state of cure, namely, by estimation of cross-link density and percent of rubber extractable.

The following examples serve to illustrate the process and product properties of the instant invention and are not intended to limit the scope of this invention.

Example 1

Three DVA samples were prepared from a comparative master batch and two other master batches. The master batches were prepared as individual single batch blends wherein the elastomer, polyolefin, chemically modified polyolefin, oxazoline-functionalized polystyrene and process aids were combined in a single batch while mixing at high speed. A process aids package, not including process oil, was added in a conventional amount. After the temperature of the batch was increased to above the melt point of the polyolefinic components, three quarters of the process oil was added in small increments. Thereafter, the cure system was added while mixing. The mixing speed was decreased as the exothermic curing reaction proceeded and, when the mixing torque peaked, the remaining one quarter of the processing oil was added. Mixing speed was then increased and maintained for about one minute. The batch was then sheeted out onto a cool mill before being ground into small particles. These particles were dried and mixed with a random copolymer of polypropylene and polyethylene, FINA Z 9470X, in a dry blend and molded into test samples. The composition of these samples and masterbatches are shown in wt.% in Table I. The results of physical property tests on these samples are shown in Table II.

Portions of sample A obtained from the comparative master batch and samples B and C obtained from the master batches within the scope of the invention were each molded into strips respectively 4 inches long by 1-1/2 inches wide and 3/8 inches thick. These strips were each separately placed in surface contact with strips of a styrene maleic anhydride copolymer, DYLARK® of Arco Chemical Corp. MYLAR® strips were inserted at one end of each of the strips, between the DVA and styrenic copolymer, to provide a small area of no direct contact between the DVA and styrenic copolymer strips. The DVA and styrenic copolymer strips with the MYLAR® film inserted at an end were then each pressed at 450°F and 150 psi for about 5 minutes to produce laminates. Upon removal from the press and cooling, the laminates were cut into test pieces 4 inches long by 1/2 inch wide. The MYLAR® strips were removed from the end of each laminate thereby providing areas for gripping the DVA strip and the styrenic copolymer strip. The laminates were then each separated by pulling on the gripping areas to peel the DVA surface from the styrenic copolymer surface adjacent to it. The control laminate parted cleanly on separation leaving no DVA adhered to the styrenic copolymer surface. Both invention DVAs, B and C, however, could not be peeled readily from the styrenic copolymer surface to which they were laminated but showed pronounced "rubber tear." The rubber tear was "partial" in sample B and "complete" in sample C.

Following the same procedure, comparative sample A and sample B and C DVAs were laminated to a thermoplastic polyester, GAFITE® of GAF Corp. The results as shown in Table II confirm the superior adherence of the invention DVAs.

Example 2

Masterbatch 3 was prepared by the single-batch process of Example 1, where the functionalized polystyrene is added prior to vulcanization of the elastomer, while masterbatch 4 was prepared by a two-step process. In the two-step process of masterbatch 4, all components except the process aids package (which did not include the inorganic filler), the cure system, and the reactive polystyrene were combined in a single batch while mixing at high speed in a Banbury mixer. The temperature of the batch was then

increased to above the melting point of the polyolefinic components and the cure system was added while mixing. When the curing reaction was complete, the batch was dumped, sheeted out onto a cool mill and then ground into small particles.

A portion of the masterbatch 4 dynamically vulcanized composition was then melt, blended with reactive polystyrene and inorganic filler, with the process oil being added in small increments. The melt blended composition was then dumped, sheeted out onto a cool mill and ground into particles which were molded into test pieces. The composition of these test pieces are shown in Table III as sample E.

A portion of the composition of masterbatch 3 was melt blended with polyethylene and inorganic filler, then dumped, cooled and ground into particles which were molded into test samples. The composition of these test samples are shown as sample D in Table III.

Physical properties of samples D and E were measured and are shown in Table IV. While it is apparent that both samples D and E showed excellent adhesion to DYLARK®, sample E had superior tensile strength and elongation. Since there is no significant difference between the compositions of samples D and E, one may conclude that the two-step process results in a DVA with superior physical properties that also has excellent adherence to styrenic copolymers.

## TABLE I

### COMPOSITION OF MASTERBATCHES

| | Comparative | 1 | 2 |
|---|---|---|---|
| Bromobutyl 2244 | 37.9 | 38 | 38 |
| Polypropylene, PD 7031 | 14.5 | 3.0 | -- |
| EXXELOR™ PO 2011 | -- | 4.0 | 7.0 |
| Oxazoline Functionalized Polystyrene | -- | 7.5 | 7.5 |
| Processing Aids Package | 14.6 | 15.3 | 15.3 |
| Process Oil | 29.0 | 29.0 | 29.0 |
| Cure System | 4.0 | 3.2 | 3.2 |

### COMPOSITION OF TEST SAMPLES

| | A | B | C |
|---|---|---|---|
| Comparative | 90 | -- | -- |
| Masterbatch 1 | -- | 93 | -- |
| Masterbatch 2 | -- | -- | 93 |
| FINA Z 9470X | 10 | 7 | 7 |

## TABLE II

### PHYSICAL PROPERTIES OF TEST SAMPLES

| Physical | A | B | C |
|---|---|---|---|
| Hardness, Shore A (5 Seconds) | 75 | 72 | 73 |
| 100% Modulus, psi | 475 | 400 | 380 |
| Tensile, psi | 967 | 567 | 491 |
| Elongation, % | 304 | 194 | 172 |
| Flex. Modulus, psi | 5,741 | 8,632 | 9,980 |
| **Flow** | | | |
| Spiral, cm | 21 | 21 | 26 |
| **Compression Set** | | | |
| 22 hrs @ 70°C, % | 35 | 58 | 55 |
| Adhesion to DYLARK® | None | Partial rubber tear | Complete rubber tear |
| Adhesion to GAFITE® | None | Partial rubber tear | Complete rubber tear |

TABLE III

COMPOSITION OF MASTER BATCHES

| | 3 | 4 |
|---|---|---|
| Bromobutyl 2244 | 54.5 | 60.9 |
| FINA Z, 9470 X | 12.5 | 14.0 |
| EXXELOR™ PO 2011 | 10.0 | 11.1 |
| Reactive Polystyrene | 14.1 | -- |
| AC9 Polyethylene | -- | 3.8 |
| Processing Aids Package* | 2.9 | 3.5 |
| Cure System | 6.0 | 6.7 |

COMPOSITION OF TEST SAMPLES

| | D | E |
|---|---|---|
| Masterbatch 3 | 58.2 | -- |
| Masterbatch 4 | -- | 52 |
| AC-9 Polyethylene | 2 | -- |
| Reactive Polystyrene | -- | 8.2 |
| Process Oil | 26.0 | 26.0 |
| Inorganic Filler | 13.8 | 13.8 |

* The processing aids package for masterbatch 3 did not contain an anti-oxidant present in conventional amounts in masterbatch 4. This difference is not deemed to have any significant effect on adherent properties.

TABLE IV

PHYSICAL PROPERTIES OF TEST SAMPLES

| Physical | D | E |
|---|---|---|
| Hardness, Shore A (5 Second delay) | 70 | 84 |
| 100% Modulus, psi | 331 | 742 |
| Tensile, psi | 360 | 822 |
| Elongation, % | 130 | 161 |
| Adhesion to DYLARK® | Rubber tear | Rubber tear |
| **Flow** | | |
| Spiral, cm | 28 | 18 |

TABLE V

| Test | Test Method |
|---|---|
| Shore A Hardness, instantaneous 5 sec. | ASTM D2240 |
| 100% Modulus, psi | ASTM D412 |
| Tensile Strength, psi | ASTM D412 |
| Flexural Modulus, psi | ASTM D412 |
| Elongation, % | ASTM D412 |
| Compression Set B, % 22 Hr. @ 70 ° C | ASTM D395 |
| Spiral flow, cm @ 800 psi 260 ° C melt temperature | Length of filled portion of a spiral-shaped mold having mold pathway of 0.3 cm diameter at 260 ° C |

TABLE VI

| Blend Components | |
|---|---|
| Component | |
| AC-9 Polyethylene | Low molecular weight polyethylene [Allied Signal Corp.] |
| Bromobutyl 2244 | Brominated isoprene-isobutylene copolymer, 41-51 Mooney viscosity (1+8) 125°C [Exxon Chemical Co.] |
| EXXELOR PO 2011 | Himic-anhydride modified polypropylene [Exxon Chemical Co.] |
| FINA Z 9470X | 5 MFR, approx. 5 wt.% ethylene content random polypropylene copolymer [Fina Oil & Chemical Corp.] |
| POLYPROPYLENE, PD 7031 | Impact copolymer of polypropylene [Exxon Chemical Co.] |
| Reactive Polystyrene XUS-40056.1 | Oxazoline-modified polystyrene, 1% oxazoline [Dow Chemical] |

Although the invention has been described with reference to its preferred embodiments, those of ordinary skill in the art may, upon reading this disclosure, appreciate changes and modifications which may be made which do not depart from the scope and spirit of the invention as described above or claimed hereafter.

## Claims

**1.** A thermoplastic olefinic composition, adherent to polyesters and styrenic copolymers, comprising:
(a) at least one vulcanizable elastomer;
(b) a polyolefin resin;
(c) a chemically modified polyolefin; and
(d) a functionalized polystyrene;
wherein the elastomer is at least partially dynamically vulcanized.

**2.** Composition according to claim 1 wherein the polyolefin resin comprises polyethylene, polypropylene or mixtures thereof.

**3.** Composition according to claim 1 or claim 2 wherein the chemically modified polyolefin is a polyolefin modified by the grafting of groups selected from the carboxylic acids, anhydrides, phenolic hydroxyls, amines, mercaptans and epoxies to the polymer backbone, and is preferably a polypropylene grafted with a group selected from the carboxylic acids and the anhydrides.

**4.** Composition according to any of the preceding claims wherein the functionalized polystyrene is an oxazoline-functionalized or epoxy-functionalized polystyrene.

**5.** Composition according to any of the preceding claims wherein the vulcanizable elastomer comprises butyl rubber, halogenated butyl rubber, EPM, EPDM or mixtures thereof.

**6.** Composition according to any of the preceding claims wherein the elastomer is from 10 to 90 wt.%; the polyolefin resin is from 90 to 10 wt.%; the chemically modified polyolefin is from 2 to 15 wt.%; and the functionalized polystyrene is from 3 to 18 wt.%; wherein all weight percentages are based on the total weight of the thermoplastic olefinic composition.

**7.** Composition according to any of the preceding claims wherein the elastomer is from 15 to 85 wt.%; the polyolefin resin is from 60 to 10 wt.%; the chemically modified polyolefin is from 4 to 8 wt.%; and the functionalized polystyrene is from 5 to 10 wt.%; wherein all weight percentages are based on the total weight of the thermoplastic olefinic composition.

**8.** Composition according to any of the preceding claims further comprising processing aids selected from

the group consisting of fillers, processing oils, ultra-violet light stabilizers, anti- oxidants, anti-blocking agents, antistatic agents, coupling agents for fillers, foaming agents, pigments, flame-retardants and mixtures thereof.

**9.** A process for producing a dynamically vulcanized alloy, adherent to styrenic copolymers, and polyester compositions comprising:
(1) blending under conditions of dynamic vulcanization:
(a) at least one vulcanizable elastomer;
(b) a polyolefin resin;
(c) a chemically modified polyolefin; and
(d) a functionalized polystyrene;
(2) adding a curative system; and
(3) at least partially curing the elastomer to produce a dynamically vulcanized alloy.

**10.** Process according to claim 9 wherein the curative system comprises a metal oxide and a maleimide.

**11.** Process according to claim 9 and 10 for producing a composition according to any of claims 1 to 8.

**12.** Process according to any of claims 9 or 10 further comprising mixing with processing aids selected from the group consisting of fillers, processing oils, ultra-violet light stabilizers, anti-oxidants, anti-blocking agents, anti-static agents, coupling agents for fillers, foaming agents, pigments, flame-retardants and mixtures thereof, simultaneously or after said step of at least partially curing.

**13.** A process for producing a dynamically vulcanized alloy, adherent to styrenic copolymers, and polyester compositions comprising:
(1) blending under conditions of dynamic vulcanization:
(a) at least one vulcanizable elastomer; and
(b) a polyolefin resin;
(2) at least partially curing the blend with a curative system;
(3) adding a functionalized polystyrene to the at least partially cured blend.

**14.** Process according to claim 13 wherein the blending of step (1) includes blending with a chemically modified polyolefin or wherein the adding of step (3) includes adding a chemically modified polyolefin.

**15.** Process according to claim 13 or claim 14 for producing a composition according to any of claims 1 to 8.

**16.** Processes according to any of claims 13 to 15 wherein the curative system comprises a metal oxide and a maleimide.

European Patent Office

# EUROPEAN SEARCH REPORT

Application Number

**EP 90 30 9900**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 269 274 (MITSUI PETROCHEMICAL)<br>* Page 5, lines 1-43 *<br>– – – | 1-12 | C 08 L 23/02<br>C 08 L 23/16<br>C 08 L 23/22<br>C 08 L 51/00<br>C 08 L 23/28 |
| X | EP-A-0 269 275 (MITSUI PETROCHEMICAL)<br>* Page 5, lines 1-40 *<br>– – – | 1-12 | |
| X | EP-A-0 305 539 (MITSUI PETROCHEMICAL)<br>* Abstract; page 11, line 14 - page 13, line 16 *<br>– – – | 1-12 | |
| A | EP-A-0 308 179 (TONEN SEKIYU KAGAKU et al.)<br>* Abstract *<br>– – – | 1-12 | |
| A | EP-A-0 379 779 (EXXON CHEMICAL)<br>* Abstract *<br>– – – | 16 | |
| A | EP-A-0 270 280 (EXXON CHEMICAL)<br>* Abstract *<br>– – – – – | 1 | |
| | | | **TECHNICAL FIELDS SEARCHED (Int. Cl.5)** |
| | | | C 08 L |

The present search report has been drawn up for all claims

| Place of search | Date of completion of search | Examiner |
|---|---|---|
| The Hague | 11 June 91 | GOOVAERTS R.E. |

**CATEGORY OF CITED DOCUMENTS**

X : particularly relevant if taken alone
Y : particularly relevant if combined with another document of the same catagory
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document